# EUROPÄISCHE PATENTSCHRIFT

(11) **EP 1 313 999 B1**
(45) Veröffentlichungstag und Bekanntmachung des Hinweises auf die Patenterteilung: **19.04.2006**
(21) Anmeldenummer: 01971628.1
(22) Anmeldetag: 21.08.2001
(51) Int. Cl.: G01B 7/30, G01D 5/16

(54) **VORRICHTUNG UND VERFAHREN ZUR WINKELMESSUNG**
DEVICE AND METHOD FOR MEASURING ANGLES
PROCEDE ET DISPOSITIF DE MESURE D'ANGLES

(30) Priorität: 22.08.2000 DE 10041089
(43) Veröffentlichungstag der Anmeldung: 28.05.2003
(73) Patentinhaber: ROBERT BOSCH GMBH, 70442 Stuttgart (DE)
(72) Erfinder: HAAS, Gunther, F-35760 St. Grégoire (FR); SIEGLE, Henrik, 71229 Leonberg (DE); MOENIKES, Ralf, 76137 Karlsruhe (DE)
(86) Internationale Anmeldenummer: PCT/DE2001/003193
(87) Internationale Veröffentlichungsnummer: WO 2002/016864

(56) Entgegenhaltungen:
- EP-A- 0 596 535
- DE-A- 19 534 995
- DE-A- 19 817 356
- US-A- 5 680 042

## Beschreibung

Die vorliegende Erfindung betrifft eine Vorrichtung zur Winkelmessung nach dem Patentanspruch 1 sowie ein entsprechendes Verfahren nach dem Patentanspruch 5.

Der Bedarf an hochpräzisen und zugleich robusten Winkelmeßsystemen in der Automobilindustrie steigt ständig. Derzeitige Einsatzgebiete für Winkelmeßsysteme sind unter anderem die Fahrdynamikregelung, beispielsweise ESP, und elektrisch unterstützte Lenksysteme. Langfristig wird der Übergang zu Steer-by-Wire den Bedarf an Winkelmeßsystemen weiter erhöhen, wobei diese Entwicklung mit einem gleichzeitigen Anwachsen der Genauigkeitsanforderungen einhergeht.

Magnetsensoren sind aufgrund ihres berührungslosen und robusten Meßprinzips prädestiniert für den Einsatz im Automobil. Basiert ein mit Magnetsensoren realisiertes Winkelmeßsystem auf dem Abtasten eines Geberrades, das entweder selbst magnetisiert ist oder aus ferromagnetischem Material besteht und beim Vorbeibewegen am abtastenden Sensor das Feld eines Gebermagneten verzerrt, so beschränken Fertigungstoleranzen die Genauigkeit des Systems. Besonders problematisch sind Exzentrizitäten, Pol- oder Zahnteilungsfehler, sowie Inhomogenitäten der Feldamplituden. Zudem lassen sich die abtastenden Sensoren nicht beliebig genau positionieren, so daß noch zusätzliche Positionierungstoleranzen vorhanden sind.

Herkömmliche Verfahren zur Winkelmessung sind beispielsweise aus der DE-P 195 34 995 bekannt. Die noch nicht veröffentlichte Druckschrift DE-P 199 58 598.9 beschreibt beispielsweise ein Noniusverfahren, bei welchem magnetische Multipolräder mit jeweils verschiedener Anzahl von Polpaaren verwendet werden und die von entsprechend angeordneten Sensoren erhaltenen Sensorsignale ausgewertet werden. Auch hier kommt es jedoch zu Winkelfehlern aufgrund der oben erwähnten Toleranzen.

Aus der DE-A- 198 17 356 ist ein Drehwinkelsensor bekannt, bei dem an einem Geberrad jeweils zwei Halisensoren ein Sinussignal und ein Cosinussignal erzeugen. Durch Summation der jeweiligen Signale eines Sensorpaares werden gemittelte Sinus- und Cosinussignale berechnet und daraus ein Arcustangenswert generiert. Auch hier sind wie oben erwähnt Winkelfehler nicht auszuschließen.

Aufgabe der Erfindung ist es daher, eine Vorrichtung und ein Verfahren zur Winkelmessung anzugeben, bei welchen Winkelfehler aufgrund von Toleranzen reduziert sind.

Diese Aufgabe wird gelöst durch eine Vorrichtung mit den Merkmalen des Patentanspruchs 1 sowie durch ein Verfahren mit dem Merkmalen des Patentanspruchs 5.

Durch das erfindungsgemäße Vorsehen einer Anzahl von Sensoren, und der Mittelung der auf der Grundlage der einzelnen Sensorsignale erhaltenen Signale sind die Auswirkungen der angegebenen Toleranzen auf die Meßgenauigkeit in sehr effektiver Weise reduzierbar.

Vorteilhafte Ausgestaltungen der erfindungsgemäßen Vorrichtung bzw. des erfindungsgemäßen Verfahrens sind Gegenstand der abhängigen Anspruche.

Gemäß einer bevorzugten Ausführungsform der erfindungsgemäßen Vorrichtung sind drei Sensoren vorgesehen, welche um das wenigstens eine Geberrad verteilt angeordnet sind. Drei in 120°-Winkeln zueinander angeordnete Sensoren bilden einen idealen Kompromiß zwischen möglichst geringer Anzahl von Sensoren und Funktionstüchtigkeit der Vorrichtung. Darüber hinaus ergeben sich symmetriebedingte Vorteile bei Fertigungstoleranzen. Es sei jedoch betont, daß das erfindungsgemäße Verfahren auch bei Verwendung von zwei Sensoren in befriedigender Weise funktioniert. Zur weiteren Steigerung der Genauigkeit sind auch mehr als zwei Sensoren einsetzbar.

Zweckmäßigerweise sind zwei drehfest zueinander angeordnete, um eine gemeinsame Drehachse drehbare Geberräder vorgesehen, wobei die Geberräder eine unterschiedliche Anzahl von Gebersegmenten aufweisen. Erfindungsgemäß sind beliebige, magnetische oder nichtmagnetische Meßprinzipien ausnutzende Geberräder verwendbar. Beispielsweise sind im Falle von magnetischen Multipolrädern die Gebersegmente als Polpaare, und im Falle von ferromagnetischen Zahnrädern als Zähne ausgebildet.

Hierbei ist vorteilhaft, daß das erste Geberrad n Gebersegmente, und das zweite Geberrad n+1 Gebersegmente aufweist. n kann beispielsweise 24 betragen, wobei auch andere Werte, entsprechend einer zu fordernden Genauigkeit, wählbar sind. Eine derartige Ausbildung mit zwei unterschiedlichen Geberrädern ermöglicht die Verwendung sogenannter Noniusverfahren, mit welchen eine besonders zuverlässige Auswertung der erhaltenen Sensorsignale möglich ist.

Zweckmäßigerweise sind die Sensoren als Hallsensoren ausgebildet. Derartige Hallsensoren sind preiswert erhältlich und erweisen sich in der Praxis als robust und zuverlässig.

Gemäß einer weiteren bevorzugten Ausgestaltung der erfindungsgemäßen Vorrichtung ist das wenigstens eine Geberrad als magnetisches Multipolrad ausgebildet.

Gemäß einer besonders bevorzugten Ausgestaltung des erfindungsgemäßen Verfahrens wird vor und/oder nach der Mittelung der erhaltenen sinus- oder cosinus- oder arcustangensförmigen Signale eine Oberwellenkorrektur durchgeführt. Eine derartige Oberwellenkorrektur kann beispielsweise unter Zugrundelegung einer Reihenentwicklung, beispielsweise einer Fourier-Reihenentwicklung der erhaltenen sinus- oder cosinusförmigen Signale durchgeführt werden.

Es ist ferner bevorzugt, daß die Arcustangensmittelung eine Offsetkorrektur und/oder eine modulo-Division zur Anpassung von Phase und Wertebereich der jeweiligen Arcustangenssignale und/oder die Bildung des arithmetischen Mittels aus den derart modifizierten Arcustangenssignalen umfaßt.

Zweckmäßigerweise erfolgt die Bildung des arithmetischen Mittels unter rechnerischer Berücksichtigung der Sprungstellen der zu mittelnden Arcustangenssignale.

Die Erfindung wird nun anhand der beigefügten Zeichnung weiter erläutert. In dieser zeigt.
- Figur 1: ein Diagramm zur Erläuterung einer Winkelmessung, welche mit der Vorrichtung gemäß der Beschreibung (Seite 6) realisierbar ist,
- Figuren 2a bis 2c: Diagramme zur Erläuterung einer mit dem erfindungsgemäßen Verfahren realisierbaren Fehlerverminderung bei der Winkelmessung,
- Figuren 3a und 3b: schematische Draufsichten einer ersten bevorzugten Ausführungsform der erfindungsgemäßen Vorrichtung,
- Figur 4: ein Diagramm zur Darstellung einer Fourier-Synthese einer Rechteckfunktion,
- Figur 5: ein Diagramm zur Darstellung von Winkelfehlern bei einer Sinus- und Cosinusmittlung und einem Versatz von 0,25 mm zweier Sensoren bzw. Sensorelemente,
- Figuren 6a bis 6d: Diagramme zur Darstellung der rechnerischen Verarbeitung eines Sensorversatzes durch Phasenanpassung und anschließender Arcustangensmittelung, und
- Figur 7: ein Diagramm zur Darstellung des Winkelfehlers für den Fall eines extremen Versatzes zweier Sensoren bzw. Sensorelemente um jeweils 1 mm nach einer Arcustangensmittelung und zusätzlich mit vorhergehender Oberwellenkorrektur.

Die nachfolgende Figurenbeschreibung bezieht sich auf die spezielle Ausführungsform einer Abtastung eines magnetischen Multipolrades. Das Verfahren ist aber auch bei anderen Geberrädern mit nichtmagnetischen oder magnetischen Meßprinzipien vorteilhaft einsetzbar. Die im folgenden angegebenen Meßwerte und -fehler beziehen sich beispielhaft auf Polräder mit n=24 und n=25 Polpaaren bei einem Außendurchmesser von 30,8 mm.

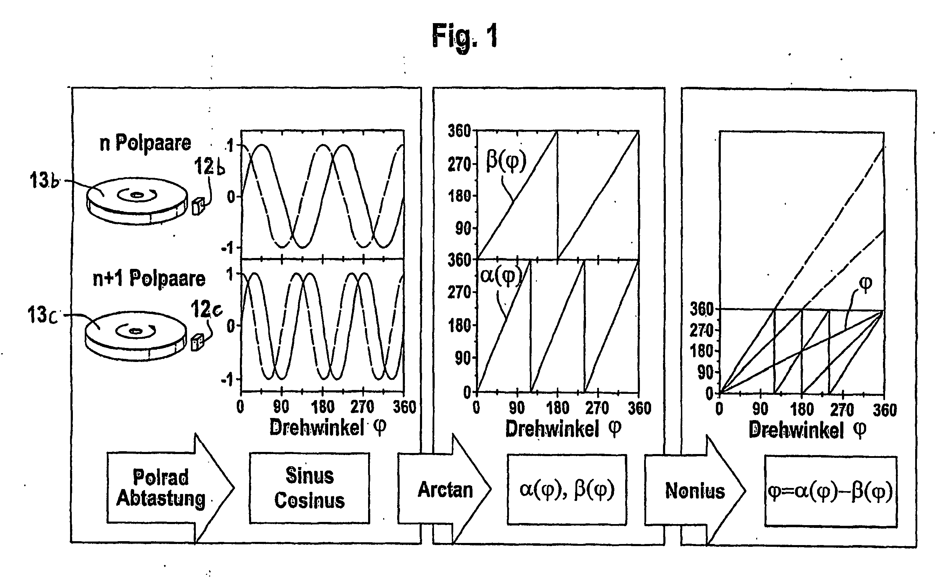

Zunächst sei das der Erfindung zugrundeliegende Meßprinzip anhand der Figur 1 erläutert.

Eine Lenksäule ist mit einem Torsionsstab ausgebildet. Konzentrisch zu dem Torsionsstab sind drei magnetische Multipolräder vorgesehen. Bei einer Drehung des oberen Teils der Lenksäule bezüglich des unteren Teils um ihre Längsachse kommt es zu einer angularen Verschiebung eines der magnetischen Multipolräder 13a bezüglich der übrigen magnetischen Multipolräder 13b und 13c. Neben den Multipolrädern ist ein Sensor angeordnet, welcher drei Sensorelemente 12a, 12b, 12c aufweist, welche den Multipolrädern 13a, 13b bzw. 13c zugeordnet sind. Aufgrund der Wechselwirkung zwischen den einzelnen Multipolrädern und den ihnen zugeordneten Sensorelementen werden trigonometrische Signale erzeugt, aus welchen die Winkellage des Torsionsstabes ableitbar ist. Hierbei dient eine gemessene Winkellage bezüglich des magnetischen Multipolrades 13a als Referenz für die Winkellage, welche mittels der beiden anderen magnetischen Multipolräder 13b und 13c ermittelt wird, wie nun anhand der Figur 1 erläutert wird. In Figur 1 sind die bei einer Drehung der Multipolräder 13b, 13c vorbei an den Sensorelementen 12b bzw. 12c enstehenden Signale dargestellt.

Die Sensorelemente 12b, 12c detektieren jeweils ein sinusförmiges Signal (durchgezogene Linien) und ein cosinusförmiges Signal (gestrichelte Linien). Durch Arcustangensbildung der jeweiligen Signalpaare erhält man zwei arcustangensförmige Signale α(ϕ), β(ϕ), welche entsprechend der unterschiedlichen Periodizität der jeweiligen Sinus/Cosinus-Signalpaare aufgrund der unterschiedlichen Anzahl von Polpaaren ebenfalls eine unterschiedliche Periodizität aufweisen. Entsprechend dem klassischen Noniusverfahren wird nun eine Funktion ϕ = α(ϕ)-β(ϕ) erzeugt, welche den Drehwinkel ϕ über den gesamten Winkelbereich von 360° eindeutig beschreibt.

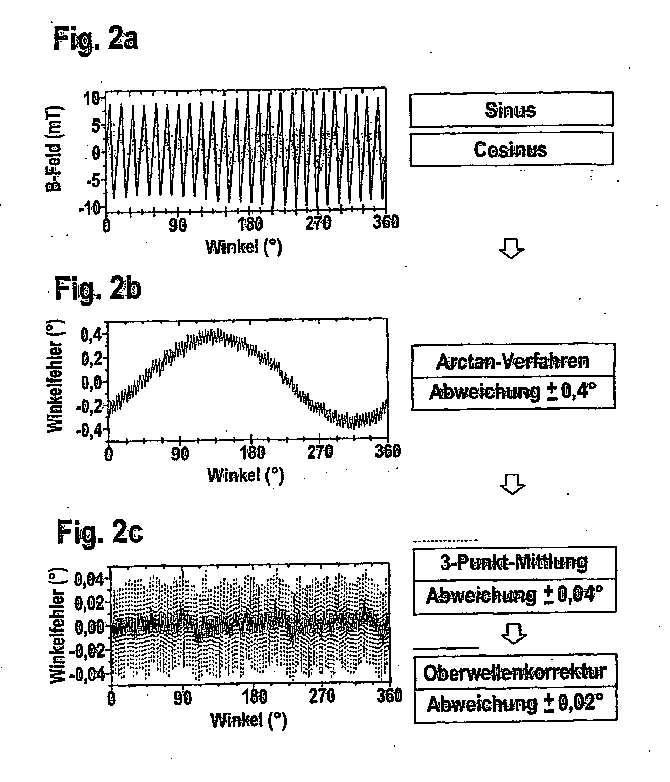

Die cosinusförmigen bzw. sinusförmigen Signale derart angeordneter Sensorelemente sind jedoch von Positionierungs- bzw. Herstellungstoleranzen abhängig. Dies sei zunächst anhand der Figur 2 verdeutlicht. Figur 2a, oben, zeigt das mit einem Hall-Sensor (beispielsweise Sensorelement 12b oder 12c) gemessene Magnetfeld eines typischen, jedoch bereits auf Teilungs- und Amplitudenfehler optimierten Multipolrades als Funktion des Winkels. Zusammen mit einem dazu phasenverschobenen Signal, welches entweder das gleiche oder ein zusätzliches Sensorelement liefert, ist, wie bereits unter Bezugnahme auf Figur 1 beschrieben, ein Drehwinkel bzw. eine Position über einem Polpaar bestimmbar. Ein Fehler bei der Positionsbestimmung überträgt sich jedoch auf den Drehwinkel des Polrades und damit auf das gesamte Sensorsystem.

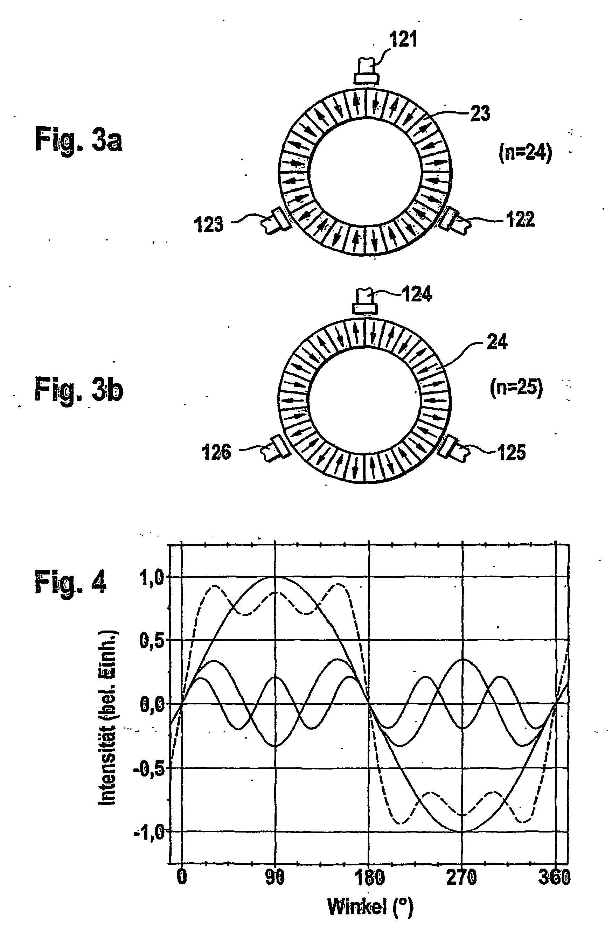

Obwohl das in der Figur 2a, oben, dargestellte sinusförmige Sensorsignal bereits von einem bezüglich Teilungs- und Amplitudenfehlern optimierten Geberrad stammt, ist deutlich eine Exzentrizität als Einhüllende zu erkennen. Diese Exzentrizität setzt sich in einen Winkelfehler um, der im ungünstig.sten Fall (bei Winkeln von etwa 100°), ±0,4° beträgt. Auch die zweite wesentliche Fehlerquelle ist bereits als höherfrequente Modulation zu erkennen. Das Geberfeld magnetischer Multipolräder besitzt nämlich einen mit abnehmendem Sensor-Polrad-Abstand zunehmenden Rechteckteil, der sich in der periodischen Abweichung vom ideal sinusförmigen Geberfeld niederschlägt (siehe hierzu auch Figur 4).

Zur Eliminierung der aufgrund einer Exzentrizität des Geberrades bezüglich seiner Drehachse auftretenden Effekte wird nun erfindungsgemäß vorgeschlagen, mehrere Sensoren bzw. Sensorelemente um das Geberrad herum anzuordnen und das arithmetische Mittel der einzelnen Sensorsignale zu bilden. In Figur 3a erkennt man drei Sensoren 121, 122, 123, welche mit 120°-Winkelabständen konzentrisch bezüglich eines Multipolrades 23 angeordnet sind. Es ist ferner in Figur 3b ein weiteres Multipolrad 24 dargestellt, welchem die Sensoren 124, 125, 126 zugeordnet sind. Das Multipolrad 24 unterscheidet sich von dem Multipolrad 23 dadurch, daß es eine unterschiedliche Anzahl von Multipolen aufweist. Die Multipolräder 23; 24 sind lediglich zur leichteren Erkennbarkeit der unterschiedlichen Multipolzahlen nebeneinander gezeichnet. Es sei davon ausgegangen, daß sie koaxial übereinander angeordnet sind. Es sei angemerkt, daß jeder Sensor 121, 122, 123, 124, 125, 126 hierbei mehrere Sensorelemente aufweisen kann, welche in fester Phasenbeziehung zueinander stehende Sinus- und Cosinussignale generieren. Die von den jeweiligen Sensoren erhaltenen Signale sind einer Auswerteeinrichtung zuführbar. Zweckmäßigerweise werden nun gemäß einer ersten bevorzugten Ausführungsform des erfindungsgemäßen Verfahrens die für jedes Geberrad erhaltenen drei Sinussignale sowie die drei Cosinussignale arithmetisch gemittelt, wobei auf der Grundlage dieser gemittelten Sinus- und Cosinussignale ein entsprechendes Arcustangenssignal generiert wird. Die folgenden Ausführungen beziehen sich auf die mit einem einzelnen Geberrad erhältlichen Signale. Die Kombination der Signale zweier oder mehrerer Geberräder, wie sie oben unter Bezugnahme auf Figur 1 beschrieben wurde, ist selbstverständlich als zusätzliche Maßnahme möglich. Für den Fall, daß für ein Geberrad drei derart ermittelte Arcustangenssignale gemittelt werden, verringert sich der in Figur 2b, Mitte, dargestellte Fehler von ±0,4° auf ± 0,04°, wie in Figur 2c, unten, Kurve A, dargestellt ist. Der ursprüngliche, sich aus den Rohdaten mit dem Arcustangens-Verfahren ergebende Winkelfehler ist somit um einen Faktor 10 reduzierbar.

Ferner ist zu beachten, daß, je geringer die Entfernung eines Sensors vom Multipolrad ist, desto größer die Abweichung eines generierten Sensorsignals vom Sinus hin zu einer Rechteckfunktion ist. Diese Rechteckfunktion läßt sich, wie in Figur 4 dargestellt ist, als Fourier-Reihe darstellen: a₁sin(cx)+a₃sin(3cx)+a₅sin(5cx)+ ... . Dabei ist der Parameter c durch die Anzahl der Pole fest vorgegeben. Die Fourierkoeffizienten aᵢ, also die Oberwellen, lassen sich leicht durch Anpassen des Meßsignals bestimmen. Es genügen bereits ein bis zwei Oberwellen, um den Fehler wie in Figur 2c unten, Kurve B, dargestellt, auf ±0,2° zu verringern. Darüber hinaus lassen sich mit diesem Verfahren im Falle der Verwendung von magnetoresistiven Sensoren störende Anisotropieeffekte kompensieren.

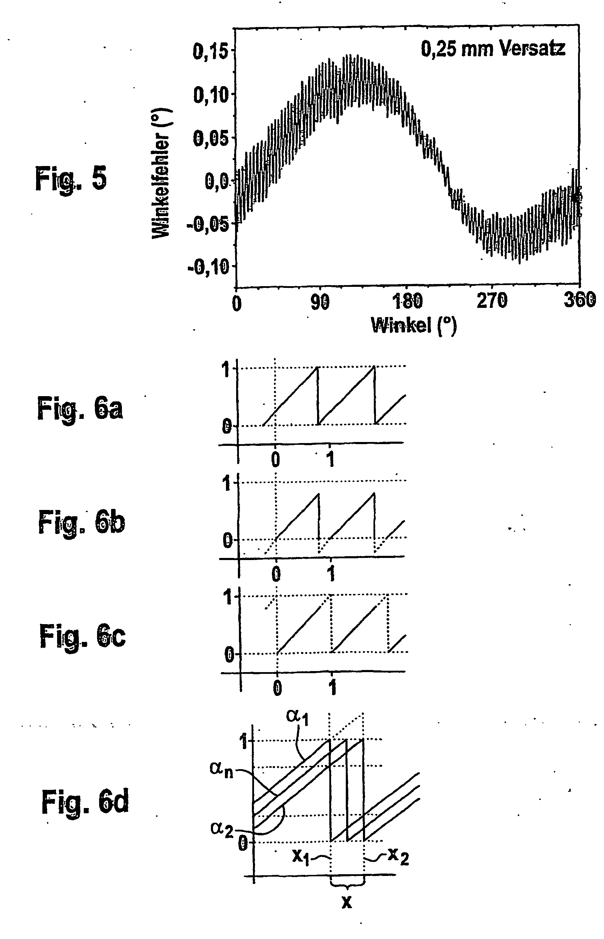

In der bisherigen Darstellung wurde davon ausgegangen, daß sich die Sensoren sehr präzise und kontrolliert um die jeweiligen Geberräder herum anordnen lassen. Unter realen Bedingungen müssen jedoch Fertigungstoleranzen berücksichtigt werden. Derartige Fertigungstoleranzen können beispielsweise darin begründet liegen, daß ein Sensorelement in seinem Gehäuse nicht mittig plaziert ist. Zwar funktioniert auch in einem derartigen Fall die beschriebene Oberwellenreduktion, jedoch verschlechtert sich die Mittelungsfunktion drastisch, wie in Figur 5 dargestellt ist. Hier ist gezeigt, daß bei einem Versatz der Sensoren um 0,25 mm sich bereits ein Winkelfehler von ±0,15° ergibt. Der Hauptgrund für diesen Effekt liegt darin begründet, daß die jeweiligen Sensoren, beispielsweise die in Figur 3 dargestellten Sensoren 121, 122, 123 nicht mehr die gleiche Phase des Geberfeldes messen. Zur Kompensation derartiger Effekte wird nun eine weitere bevorzugte Ausführungsform des erfindungsgemäßen Verfahrens, welche alternativ oder zusätzlich zu den bereits beschriebenen Vorgehensweisen anwendbar ist, anhand der Figuren 6a bis 6d beschrieben. Es sei hier davon ausgegangen, daß zunächst für jeden einzelnen Sensor, beispielsweise die Sensoren 121, 122, 123 der Figur 3a, aus den jeweils erhaltenen Sinus- und Cosinussignalen ein Arcustangenssignal generiert wird. Aufgrund des Versatzes der Sensoren besitzen diese aber eine beliebige. Phase, wie in Figur 6a dargestellt ist. Um die Phase für eine spätere Mittelung anzugleichen, wird zunächst der Offset des Arcustangens abgezogen, wie in Figur 6b dargestellt ist. Anschließend wird eine Modulo-Division durchgeführt, d. h. die durch den Abzug des Offsets negativen Funktionsbereiche werden, wie in Figur 6c gezeigt ist, an die jeweiligen Spitzen der Arcustangensfunktion angehängt (d. h. den negativen Funktionswerten wird der Wert 1 hinzuaddiert). Das sich ergebende Signal, welches teils gepunktet und teils mit durchgezogener Linie in Figur 6c dargestellt ist, weist eine Phase und einen Wertebereich auf, welche miteinander übereinstimmen. Mit dem für jeden der drei Sensoren 121, 122, 123 erhaltenen modifizierten Arcustangenssignal wird nun eine Mittelung vorgenommen.

Bei dieser Mittelung, welche schematisch für zwei Arcustangenssignale in Figur 6d dargestellt ist, wird das arithmetische Mittel der modifizierten Arcustangenssignale gebildet. Es sei davon ausgegangen, daß die Arcustangensfunktionen α₁ und α₂ gemittelt werden sollen. Besonders sind hierbei die Sprungstellen zu berücksichtigen, welche am Anfang (Funktion α₁) und am Ende (Funktion α₂) des Intervalls X auftreten. Eine einfache Addition der Funktionswerte in diesem Intervall würde zu unbefriedigenden Ergebnissen führen, da z. B. eine Addition der Funktionswerte an der Stelle X₁ zu einem gemittelten Funktionswert unterhalb des Funktionswertes von α₂ führen würde. Eine Möglichkeit zur Vermeidung dieser Schwierigkeit besteht darin, daß in den Bereichen, in denen Meßwerte im oberen und unteren Viertel des Wertebereichs liegen, d. h. in dem Intervall X, zu den unteren Meßwerten eine 1 zu addieren und erst anschließend das arithmetische Mittel zu bilden. Zweckmäßigerweise erfolgt anschließend wiederum eine modulo-Divison, damit die Meßwerte wiederum im richtigen Intervall [0;1] liegen. Alternativ könnte zum Erkennen einer Sprungstelle auch die Standardabweichung betrachtet werden.

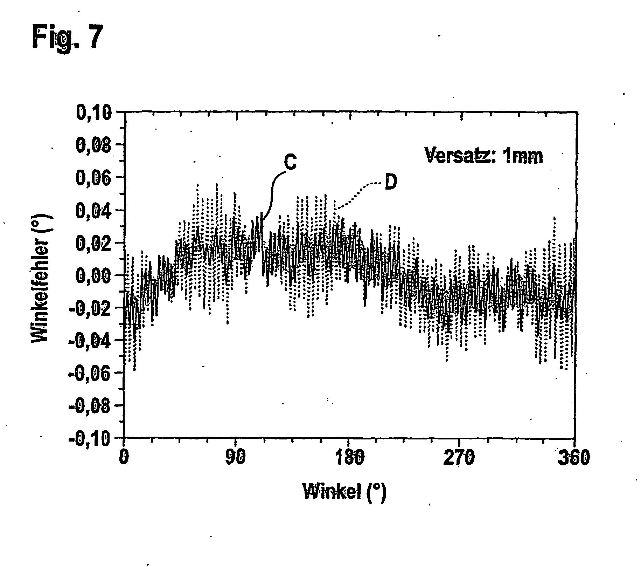

Analog zu der oben beschriebenen Mittelung zur Eliminierung der Exzentrizität kann auch bei jedem der angegebenen Arcustangens-Mittelungsverfahren - als erster Schritt für jedes Sensorelement separat - die ebenfalls bereits beschriebene Oberwellenkorrektur vorgenommen werden. Nimmt man einen extremen Versatz der Sensorelemente von jeweils 1 mm an, so erreicht man mit diesem Verfahren immerhin eine Genauigkeit von 0,04°, wie in Figur 7, Kurve C, dargestellt ist. Ohne Oberwellenkorrektur erhält man eine Winkelfehlerkurve mit einem Fehler von 0,06°, wie in Figur 7 mittels der Kurve D dargestellt ist.

Insgesamt erhält man ein z. B. dem Signal α(ϕ) der Figur 1 entsprechendes Arcustangenssignal, welches jedoch gegenüber diesem wesentlich weniger fehleranfällig bzw. fehlerbehaftet ist. Nach analogem Erhalt eines zweiten, dem. Signal β(ϕ) entsprechenden Arcustangenssignals, kann beispielsweise das beschriebene Noniusverfahren eingesetzt werden.

## Patentansprüche

1. Vorrichtung zur Winkelmessung mit wenigstens einem Geberrad (23, 24), mindestens einer Auswerteeinrichtung und Wenigstens einem mit dem Geberrad (23, 24) zusammenwirkenden, wenigstens ein Sensorelement umfassenden Sensor (121, 122, 123, 124, 125, 126), wobei mittels des Zusammenwirkens von Geberrad und Sensor ein einem zu messenden Winkel zuordnenbares Paar aus einem sinusförmigen und einem cosinusförmigen Signal erhältlich ist, wobei
zwei um eine gemeinsame Drehachse drehbare, drehfest zueinander angeordnete Geberräder (23, 24) vorgesehen sind, wobei die Geberräder (23, 24) eine unterschiedliche Anzahl von Gebersegmenten aufweisen und jeweils drei Sensoren (121, 122, 123, 124, 125, 126) um jedes Geberrad (23, 24) verteilt angeordnet sind, deren sinusförmige und
cosinusförmige Signale zum Erhalt eines gemittelten sinusförmigen Signals bzw. eines gemittelten cosinusförmigen Signals, und/oder nach Bildung eines arcustangensförmigen Signals aus dem jeweiligen gemittelten oder ungemittelten sinus- oder cosinusförmigen Signalen zum Erhalt eines gemittelten arcustangensförmigen Signals mittels der Auswerteeinrichtung rechnerisch miteinander in Beziehung setzbar sind.

2. Vorrichtung nach Anspruch 1, **dadurch gekennzeichnet, daß** das erste Geberrad (23) n Segmente und das zweite Geberrad (24) n+1 Segmente aufweist:

3. Vorrichtung nach einem der vorstehenden Ansprüche, **dadurch gekennzeichnet, daß** die Sensoren (121, 122, 123, 124, 125, 126)) als Hallsensoren ausgebildet sind.

4. Vorrichtung nach einem der vorstehenden Ansprüche, **dadurch gekennzeichnet, daß** das wenigstens eine Geberrad (23, 24) als magnetisches Multipolrad ausgebildet ist.

5. Verfahren zur Winkelmessung auf der Grundlage wenigstens eines einem zu messenden Winkel zuordnenbaren Paares aus einem sinusförmigen und einem cosinusförmigen Sensorsignal, welche durch Wechselwirkung wenigstens eines Geberrades (23, 24) mit wenigstens einem Sensor (121, 122, 123, 124, 125, 126) generiert werden, wobei zwei um eine gemeinsame Drehachse, drehfest zueinander angeordnete Geberräder (23, 24) verwendet werden, wobei die Geberräder (23, 24) eine unterschiedliche Anzahl von Gebersegmenten aufweisen und jeweils drei Sensoren (121, 122, 123, 124, 125, 126) um jedes Geberrad (23, 24) verteilt angeordnet sind, die jeweils sinus- bzw. cosinusförmige Signale liefern, wobei wenigstens zwei Paare aus einem sinusförmigen und einem.cosinusförmigen Signal erhalten werden und die sinusförmigen und cosinusförmigen Signale der jeweiligen Paare zum Erhalt eines gemittelten sinus- bzw. cosinusförmigen Signals und/oder nach Bildung eines arcustangensförmigen Signals aus den jeweiligen gemittelten oder ungemittelten sinusförmigen und cosinusförmigen Signalen zum Erhalt eines gemittelten arcustangensförmigen Signals rechnerisch miteinander in Beziehung gesetzt werden.

6. Verfahren nach Anspruch 5, **dadurch gekennzeichnet, daß** eine Oberwellenkorrektur der erhaltenen Signale vor und/oder nach ihrer Mittelung durchgeführt wird, wobei die Ausgangssignale der Sensoren in Fourier-Reihon entwickelt werden und die Fourierkoeffizienten, die Oberwellen entsprechen, bestimmt und bei der Signalverarbeitung berücksichtigt werden

7. Verfahren nach einem der Ansprüche 5 oder 6, **dadurch gekennzeichnet, daß** die Arcustangensmittelung eine Offsetkorrektur und/oder eine modulo-Division zur Anpassung von Phase und Wertebereich der jeweiligen zu mittelnden Arcustangenssignale und/oder die Bildung des arithmetischen Mittels aus den derart modifizierten Arcustangenssignalen umfaßt.

8. Verfahren nach Anspruch 7, **dadurch gekennzeichnet, daß** die Bildung des arithmetischen Mittels unter rechnerischer Berücksichtigung der Sprungstellen der zu mittelnden Arcustangenssignale erfolgt.

## Claims

1. Apparatus for angle measurement having at least one transmitter wheel (23, 24), at least one evaluation device and at least one sensor (121, 122, 123, 124, 125, 126) cooperating with the transmitter wheel (23, 24) and comprising at least one sensor element, it being possible by means of the interaction of transmitter wheel and sensor to obtain a pair, assignable to an angle to be measured, composed of a sinusoidal signal and a cosinusoidal signal, in which two transmitter wheels, (23, 24) are provided which can be rotated about a common axis of rotation and are arranged in a rotationally fixed fashion relative to one another, the transmitter wheels (23, 24) having a different number of transmitter segments, and in each case three sensors (121, 122, 123, 124, 125) being arranged distributed around each transmitter wheel (23, 24), it being possible by means of the evaluation device to compute the mutual relationship between the sinusoidal and cosinusoidal signals thereof in order to obtain an averaged sinusoidal signal or an averaged cosinusoidal signal, and/or after the formation of an arctan signal from the respective averaged or unaveraged sinusoidal or cosinusoidal signals, in order to obtain an averaged arctan signal.

2. Apparatus according to Claim 1, **characterized in that** the first transmitter wheel (23) has n segments, and the second transmitter wheel (24) has n+1 segments.

3. Apparatus according to one of the preceding claims, **characterized in that** the sensors (121, 122, 123, 124, 125, 126) are designed as Hall sensors.

4. Apparatus, according to one of the preceding claims, **characterized in that** the at least one transmitter wheel (23, 24) is designed as a magnetic multipole wheel.

5. Method for angular measurement based on at least one pair, assignable to an angle to be measured, composed of a sinusoidal and a cosinusoidal sensor signal, which signals are generated by interaction of at least one transmitter wheel (23, 24) with at least one sensor (121, 122, 123, 124, 125, 126) in which two transmitter wheels (23, 24) arranged about a common axis of rotation in a rotationally fixed fashion relative to one another are used, the transmitter wheels (23, 24) having a different number of transmitter segments, and in each case three sensors (121, 122, 123, 124, 125, 126) which respectively supply sinusoidal and cosinusoidal signals being arranged distributed around each transmitter wheel (23, 24), at least two pairs composed of a sinusoidal and a cosinusoidal signal being obtained, and the mutual relationship between the sinusoidal and cosinusoidal signals of the respective pairs being computed in order to obtain an averaged sinusoidal signal or cosinusoidal signal, and/or, after the formation of an arctan signal from the respective averaged or unaveraged sinusoidal and cosinusoidal signals, in order to obtain an average arctan signal.

6. Method according to Claim 5, **characterized in that** a harmonic correction of the obtained signals is carried out before and/or after their averaging, the output signals of the sensors being expanded in Fourier series and the Fourier coefficients corresponding to harmonics are determined and taken into account in the signal processing.

7. Method according to one of Claims 5 and 6, **characterized in that** the arctan averaging comprises an offset correction and/or a modulo division for matching phase and value range of the respective arctan signals to be averaged, and/or the formation of the arithmetic mean from the arctan signals modified in such a way.

8. Method according to Claim 7, **characterized in that** the points of discontinuity in the arctan signals to be averaged, are taken into account in the computation for forming the arithmetic mean.

## Revendications

1. Dispositif de mesure d'angles comprenant au moins une roue de capteur (23, 24), au moins un dispositif d'exploitation et au moins un détecteur (121, 122, 123, 124, 125, 126) coopérant avec la roue de capteur (23, 24) et comprenant au moins un élément de détection, la coopération entre la roue de capteur et le détecteur permettant d'obtenir une paire de signaux constituée d'un signal sinusoïdal et d'un signal cosinusoïdal et associée à un angle à mesurer,
dans lequel deux roues de capteur (23, 24) peuvent tourner autour d'un axe commun mais sont solidaires en rotation l'une par rapport à l'autre, les roues de capteur (23, 24) présentant un nombre différent de segments de capteur, et respectivement trois détecteurs (121, 122, 123, 124, 125, 126) sont répartis autour de chaque roue de capteur (23, 24), et leurs signaux sinusoïdaux et cosinusoïdaux sont mis en relation mathématique pour obtenir un signal sinusoïdal moyenné ou un signal cosinusoïdal moyenné, et/ ou, après la formation d'un signal arc tangent à partir du signal respectif sinusoïdal ou cosinusoïdal moyenné ou non moyenné, pour obtenir un signal arc tangente moyenné par le dispositif d'exploitation.

2. Dispositif selon la revendication 1,
**caractérisé en ce que**
la première roue de capteur (23) présente (n) segments et la deuxième roue de capteur (24) présente (n+1) segments.

3. Dispositif selon l'une des revendications précédentes,
**caractérisé en ce que**
les détecteurs (121, 122, 123, 124, 125, 126) sont des capteurs Hall.

4. Dispositif selon l'une des revendications précédentes,
**caractérisé en ce qu'**
au moins une roue de capteur (23, 24) est une roue multipolaire magnétique.

5. Procédé de mesure d'angles sur la base d'au moins une paire de signaux, constituée d'un signal de détection sinusoïdal et d'un signal de détection cosinusoïdal, et associée à l'angle à mesurer, les signaux étant générés par interaction d'au moins une roue de capteur (22, 24) avec au moins un détecteur (121, 122, 123, 124, 125, 126),
selon lequel
on utilise deux roues de capteur (23, 24) tournant autour d'un axe de rotation commun mais solidaires en rotation l'une par rapport à l'autre, les roues de capteur (23, 24) présentant un nombre différent de segments de capteur, et respectivement trois détecteurs (121, 122, 123, 124, 125, 126) sont répartis autour de chaque roue de capteur (23, 24), les détecteurs fournissant respectivement des signaux sinusoïdaux ou cosinusoïdaux, au moins deux paires de signaux constituées d'un signal sinusoïdal et d'un signal cosinusoïdal, et on met les signaux sinusoïdaux et cosinusoïdaux des paires respectives en relation mathématique pour obtenir un signal sinusoïdal ou cosinusoïdal moyenne et/ou,
après la formation d'un signal arc tangente à partir des signaux sinusoïdaux et cosinusoïdaux respectifs moyennés ou non moyennés, pour obtenir un signal arc tangente moyenné.

6. Procédé selon la revendication 5,
**caractérisé en ce qu'**
on réalise une correction d'harmoniques des signaux obtenus avant et/ou après la formation de leur moyenne, les signaux de sortie des détecteurs étant développés en séries de Fourier dont les coefficients qui correspondent à des harmoniques, sont déterminés et pris en compte dans le traitement des signaux.

7. Procédé selon l'une des revendications 5 ou 6,
**caractérisé en ce que**
la formation de la moyenne arc tangente comprend une correction de décalage et/ou une division modulo pour l'adaptation de la phase et de la plage de valeurs des signaux arc tangente respectifs à moyenner, et/ou comprend la formation de la moyenne arithmétique à partir des signaux arc tangente ainsi modifiés.

8. Procédé selon la revendication 7,
**caractérisé en ce que**
la formation de la moyenne arithmétique s'effectue en prenant en compte les sauts des signaux arc tangente à moyenner.
